Europäisches Patentamt

**European Patent Office**

Office européen des brevets

(11) Publication number: **0 026 294**
**B1**

(12) # EUROPEAN PATENT SPECIFICATION

(45) Date of publication of patent specification: **21.03.84**

(21) Application number: **80104474.4**

(22) Date of filing: **29.07.80**

(51) Int. Cl.³: **C 08 L 7/00, C 08 K 3/10, C 08 J 5/10, B 29 H 9/10, B 60 C 1/00 //(C08L7/00, 17/00)**

(54) **Cured rubber skim stock compositions having improved metal adhesion and metal adhesion retention, and tyre.**

(30) Priority: **22.08.79 US 68796**

(43) Date of publication of application:
**08.04.81 Bulletin 81/14**

(45) Publication of the grant of the patent:
**21.03.84 Bulletin 84/12**

(84) Designated Contracting States:
**BE DE FR GB IT LU SE**

(56) References cited:
**DD - A - 50 302**
**DE - A - 1 570 150**
**GB - A - 1 169 366**
**US - A - 2 392 618**
**US - A - 2 437 538**
**US - A - 4 013 817**

(73) Proprietor: **THE FIRESTONE TIRE & RUBBER COMPANY**
**1200 Firestone Parkway**
**Akron, Ohio 44317 (US)**

(72) Inventor: **Davis, James A.**
**10688 Mogadore Road**
**Uniontown Ohio 44685 (US)**
Inventor: **Kang, Jung W.**
**6150 Terrace Hills Drive**
**Clinton Ohio 44216 (US)**

(74) Representative: **Kraus, Walter, Dr. et al,**
**Patentanwälte Dres. Kraus & Weisert**
**Irmgardstrasse 15**
**D-8000 München 71 (DE)**

Courier Press, Leamington Spa, England.

Cured rubber skim stock compositions having improved metal adhesion and metal adhesion
retention, and tyre

The present invention is directed to improvement in the adhesion and adhesion retention between a rubber skim stock composition, used in the manufacture of tyres, conveyor belts, hoses and the like, and metallic reinforcement cord such as steel wire and cable which commonly carries a protective coating of zinc or brass.

In the manufacture of the foregoing rubber articles, particularly steel-belted bias and radial tyres, it has become common to reinforce the rubber skim stock material with steel wire or cable. The metallic reinforced rubber is employed as a belt, one or more of which is circumferentially oriented beneath the tread stock to maintain the integrity and shape of the tyre during inflation and subsequent load. In order for the belt to function effectively, it is imperative that adhesion between the rubber and the steel cord be effectively maintained. Because steel is prone to oxidation, which even in minor degree is highly deleterious to the necessary adhesion with the rubber skim stock, and it would be most impractical to incorporate a chemically clean, oxidation-free steel cord in the belt at the time of its manufacture, the steel cord is plated with zinc or brass thereby protecting it from oxidation until it can be used.

While adhesion between zinc or brass-plated steel cord and rubber is generally far greater than that between the latter and oxidized steel, existing data determined from article life as well as modern testing techniques indicates that adhesion obtained between plated steel cord and the elastomer must be increased for improved article life and service. Adhesion must also be improved between the rubber skim stock and bright steel, i.e., surfaces of the cord which are neither plated nor oxidized, generally occurring when the steel cords and rubber skim stock are cut to size from larger, calendered sheets of the reinforced rubber stock.

In order to promote adhesion between rubber and ferrous metals it is known to employ a variety of metallic salts as coatings to the metal or as an ingredient in a rubber composition. The former techniques is described in US—A—1,919,718 which discloses a composite rubber product that adheres to ferrous metals. The invention requires the coating of the metal with a metallic salt such as that formed with copper, cobalt, manganese, iron or lead and a fatty acid of high molecular weight, e.g., stearic, palmitic, oleic, linoleic and lauric. Alternatively, the metallic salt may be dissolved in a solvent or in a rubber cement which is then applied to the metal surface. The rubber layer is then applied and vulcanized in position.

US—A—2,643,273 discloses a rubber adhesive composition which contains a water soluble cobalt salt to increase the adherence of rubber to metal. The specification discloses incorporating cobalt chloride or sulfate in the rubber or dipping the metal in a solution of the salt.

US—A—3,897,583 is directed toward the adhesion of metal to rubber by incorporating a cobalt salt in a rubber stock which contains an adhesive resin forming system based on a methylene donor which is a methylolated nitroalkane in combination with a resorcinol type methylene acceptor. Cobalt salts disclosed include those of aliphatic or alicyclic carboxylic acids having 6—30 carbon atoms.

US—A—3,903,026 discloses a rubber composition containing cobalt carboxylate and magnesium oxide to improve the adhesion of the rubber to zinc or zinc alloy plated steel.

US—A—3,936,536 discloses the method of adhering rubber to metal by coating the metal with rubber containing a small amount of $Co(NH_3)_2 \cdot Cl_2$.

US—A—3,993,847 discloses a process of bonding a rubber to a ferrous metal and such a laminated article. Adhesion is improved by employing an adhesive comprising a conjugated diene and a heterocyclic nitrogen base and containing about 5—180 parts of silica filler per 100 parts of the diene-heterocyclic nitrogen interpolymer. The patent states that adhesion is further improved by using a rubber containing small amounts of cobalt metal.

While others have sought to enhance adhesion between rubber compositions and metals by employing certain cobalt compounds and nickel compounds (DE—A—1,570,150), the addition of depolymerized rubber to unvulcanized rubber compositions to improve adhesion with metals has not been described in any patents or publications. US—A—3,657,160 for instance dicloses a process for reclaiming scrap rubber by heating the rubber in the presence of an aldehyde or aldehyde donor and a resorcinol material. The reclaimed material is thereafter mixed with rubber compositions and vulcanized and is found to possess good non-staining properties.

US—A—3,896,069 discloses the production of resins from scrap rubber by first solubilizing the rubber in a liquid hydrocarbon with heat and then contacting the solubilized rubber with an alkylation catalyst, or aldehyde or ketone co-reactant to form the resin. The resin may then be incorporated in rubber compounds to enhance tack, increase tensile strength and stabilize the composition against degradation.

Lastly, Defensive Publication No. T949,009 discloses the stabilization of various elastomers with solubilized reclaimed rubber as well as a process for reclaiming the rubber.

Thus, although processes exist for the reclamation of rubber from scrap vulcanized rubber, it can be stated that it has heretofore been unknown to incorporate depolymerized scrap rubber with new, unvulcanized rubber stock for the purpose of improving adhesion between the rubber stock and metal subsequent to vulcanization. Moreover, no one appears to have studied the effect on metal adhesion brought about by the addition of specific cobalt compounds and depolymerized rubber to otherwise conventional rubber stocks.

It is therefore the object of the present invention to provide a rubber skim stock having improved adhesion and adhesion retention with metallic reinforcement such as steel and brass-plated or zinc-plated steel which can be in the form of, for example, wire or cord.

It is yet another object of the present invention to provide a tyre having steel reinforcing elements embedded in the rubber skim stock disclosed herein.

These objects are achieved by the present invention.

The invention is directed to cured rubber skim stock compositions having improved metal adhesion and metal adhesion retention properties which is characterized by containing 100 parts of a vulcanizable rubber stock; from 0.5 to 30.0 parts by weight of depolymerized scrap rubber, per 100 parts of the rubber component in said rubber stock; and from 0.05 to 10.0 parts by weight of an inorganic salt selected from cobalt chloride, cobalt hydrate, cobalt nitrate, nickel chloride, nickel hydrate and nickel nitrate, per 100 parts of the rubber component in said rubber skim stock.

The invention is also directed to a tyre having metallic reinforcing elements embedded in vulcanized rubber skim stock which is characterized by having incorporated therein: from 0.5 to 30.0 parts by weight of depolymerized scrap rubber, per 100 parts of the rubber component in said rubber skim stock; and from 0.05 to 10.0 parts by weight of an inorganic salt selected from cobalt chloride, cobalt hydrate, cobalt nitrate, nickel chloride, nickel hydrate and nickel nitrate, per 100 parts of the rubber component in said rubber skim stock.

In the practice of the present invention, depolymerized scrap rubber (DSR) and certain inorganic cobalt or nickel salts are mixed with a rubber skim stock which is, in turn, subsequently reinforced with metallic cords.

The rubber skim stock composition of our invention exhibits enhanced adhesion and adhesion retention with metallic reinforcement such as steel, plated with brass or zinc or unplated, and comprises a vulcanizable rubber skim stock having from about 0.5 to about 30.0 phr DSR, with about 0.5 to about 10.0 parts by weight of depolymerized scrap rubber being preferred, and an amount of from about 0.05 to about 10.0 parts by weight of the inorganic cobalt or nickel salt, with about 0.2 to about 2.0 being preferred. Both additives are present in parts per hundred parts of rubber (phr) based upon the weight of the rubber component in the rubber skim stock.

The metal of the inorganic metal salt may be present in the metallic reinforcing cord e.g. steel cord, brass-plated steel cord and zinc-plated steel cord.

To illustrate our invention two rubber skim stocks are presented hereinbelow which are suitable for preparation of rubber articles such as tyres. Adhesion between these stocks with steel reinforcement subsequent to vulcanization has been measured and it also presented hereinbelow. It is to be understood that the composition of the rubber skim stocks provided is not part of the present invention and that they have been presented solely to enable those skilled in the art to have at least one rubber skim stock with which to practice the invention.

The ingredients utilized in the practice of the present invention include solubilized reclaimed rubber, or depolymerized scrap rubber (DSR), with and without inorganic cobalt or nickel salts, particularly cobalt or nickel hydrate. In order to ensure adequate dispersion of the ingredients in the rubber skim stock, they are preferably added during masterbatching although they can also be added subsequently. Solubilized reclaimed rubber (DSR) is known and can be produced by treating scrap vulcanized rubber with a volatile aromatic hydrocarbon solvent at 200°C. to 370°C. for 1.1 to 5.0 hours. Generally, from 2 to about 900 parts by weight of rubber per 100 parts of the solvent are employed. Excess solvent is removed by distillation leaving the soluble DSR for addition to the rubber composition. Preferred amounts of the DSR include from about 0.5 to about 10.0 phr.

With respect to the inorganic metal salts, suitable ones for use with DSR are cobalt chloride, cobalt hydrate, cobalt nitate, nickel chloride, nickel hydrate and nickel nitrate. We have found cobalt hydrate to be particularly useful and it can be employed in amounts of from about 0.05 to about 10.0 phr. The composition of the cobalt hydrate (hydroxide) powder which we have employed is 61.25% cobalt, 34.42% oxygen, 2.17% hydrogen and 2.16% inorganic material (traces of inorganic metals, sulfates, phosphates, acid insolubles, etc.). Cobalt hydrate itself has a formula weight of 92.956 and is free of any chemically bound water. Cobalt hydrate having this composition can be obtained from the Shepherd Chemical Company, Cincinnati, Ohio. Other cobalt or nickel salts such as the chlorides, nitrates and nickel hydrate can be employed in substantially the same amounts.

In order to determine the improvement in adhesion obtained when DSR is added to the rubber skim stock and when DSR with the cobalt or nickel salt is added thereto, T-adhesion tests (rubber-steel cord) were conducted.

The test utilized T-adhesion pads prepared by placing 60 gauge slabs of uncured fully compounded rubber skim stock on 51 gauge fabric reinforced rubber backing. Commercial brass-coated wires (1×5×0.25 mm diam.) were placed between two pads of the reinforced skim stock with the wires in contact with the uncured rubber skim at 1.25 cm intervals. The width of each adhesion pad was 1.25 cm. The pads were placed in a mold and were cured for 30 minutes at 149°C. Testing was done on a Model 1130 Instron (trade mark) Universal Tester at a crosshead speed of 25.4 cm per minute and 110°C, The T-adhesion pads were preheated in the 110°C. oven for 20 minutes prior to testing. oven aging of the cured T-adhesion pads was done in a forced air oven at 121°C. for two days. Steam bomb aging of the cured samples was done in a pressure tight bomb for one hour at 149°C., in a saturated steam atmosphere.

Detailed T-adhesion test procedure

1. Using a Clicker machine and a 15.24×1.25 cm die, prepare an adequate number of calendered and control stock samples for T-adhesion pad building.
2. Use one piece of calendered fabric reinforced rubber backing (0.1295 cm).
3. Ply one piece of control rubber stock (0.1524 cm) onto the fabric backing.
4. Place sample in building jig with fabric side down.
5. Place ten cords (of brass or zinc coated wire) approximately 17.78 cm in length equally spaced on top of the two piece assembly.
6. Invert another 2 ply assembly, made as in items 1, 2 and 3, on top of cords so that cords are between the 2 layers of rubber skim stock to be tested.
7. This assembly should now fit snugly into the curing mold.
8. Adhesion pads shall be cured for 30 minutes at 149°C. and then allowed to equilibrate for 24 hours.
9. Testing machine: Model 1130 Instron Universal Tester.
10. Test speed 25.4 cm/minute; testing temperature, 110°C. after 20 minutes preheat.
11. The top grip shall be of a special holder made for the cured sample, with a slot in the bottom to permit the sample to be inserted with the wires protruding. The bottom grip should be a wedge type, designed to exert increasing tightening as each wire is pulled from the cured sample.
12. Record 10 wire pull-outs and average. Multiply average pull-out force value by 0.3572 to obtain kilograms per centimeter.

In the tests which follow, a rubber skim stock, Stock A, was prepared to which the ingredients of the present invention were added in varying amounts. Formulations for each are as follows with all parts given on the basis of parts per hundred parts of rubber (phr) by weight according to the weight of the rubber, unless otherwise specified.

| Compounding ingredients | Stock A |
| --- | --- |
| Natural rubber | 100 |
| Carbon black | 60 |
| Zinc oxide | 7.5 |
| Stearic acid | 0.5 |
| Santoflex DD*1 (trade mark) | 2.0 |
| Santoflex 13*2 (trade mark) | 1.0 |
| Process oil | 4.0 |
| Santocure NS*3 (trade mark) | 0.6 |
| Sulfur MB*4 | 3.5 |
| Santogard PVI*5 (trade mark) | 0.4 |

*1 6-dodecyl-1,2-dihydro-2,2,4-trimethylquinoline
*2 N-(1,3-dimethylbutyl)-N'-phenyl-p-phenylenediamine
*3 N-t-butyl-2-benzothiazolesulphenamide
*4 80% Insoluble sulfur and 20% process oil
*5 N-(cyclohexylthiol)phthalimide

In the first series of tests, DSR was added to Stock A in amounts of from 0.5 to 10.0 phr (Examples 2—6). Addition of DSR was as a DSR/process oil mixture comprising 95 DSR by weight and 5 percent process oil. For comparison, DSR was omitted from Example 1 wherein resorcinol and hexamethylenetetramine were present in the amount indicated. While Example 1 does not constitute a control, it has been utilized as another formulation, not a part of the present invention, which does exhibit a fair amount of adhesion for metallic reinforcement. A separate control was run utilizing a stock substantially similar to A but having 50 parts of carbon black. Adhesion promoting compounds were not added to this stock which was vulcanized around metallic reinforcement and tested as described hereinbelow.

Three sets of test were conducted for the Control and Examples 1—6 and these are reported in Table I. The tests included T-adhesion determination for vulcanized specimens—unaged or unconditioned; Test A; oven aged, Test B; and, steam bomb aged, Test C. The force necessary to pull or remove the metallic reinforcement from the vulcanized rubber skim stock is given first, in Kg./cm., followed by the percent of rubber skim stock remaining on the surface of the metallic reinforcement. The amount of rubber skim stock remaining on the metallic reinforcement is determined by visual examination and reported as % rubber coverage.

4

Resorcinol, phr
Hexamethylenetetramine, phr
DSR, phr
Test A:
Unaged or unconditioned
    plated steel cord[a]
        Brass-plated Kg./cm.
        % rubber coverage
Test B:
Oven aged plated steel cord[b]
        Brass plated Kg./cm.
        % rubber coverage
Test C:
Steam bomb aged plated
    steel cord[c]
        Brass-plated Kg./cm.
        % rubber coverage

[a] T-adhesion pads cured 30 minutes at 149°C., and tested at 110°C.
[b] T-adhesion pads cured 30 minutes at 149°C., heat aged in a forced air oven for 2 days at 121·C and tested at 110°C.
[c] T-adhesion pads cured 30 minutes at 149°C., steam bomb aged 1 hour at 149°C. and tested at 110°C.
*) Comparative example

TABLE I
Effects of different levels of DSR in Stock A

| | Control | Ex. 1*) | Ex. 2 | Ex. 3 | Ex. 4 | Ex. 5 | Ex. 6 |
|---|---|---|---|---|---|---|---|
| Resorcinol, phr | — | 2.0 | — | — | — | — | — |
| Hexamethylenetetramine, phr | — | 2.2 | — | — | — | — | — |
| DSR, phr | — | — | 0.5 | 1.0 | 2.0 | 5.0 | 10.0 |
| Test A Brass-plated Kg./cm. | 20.9 | 22.15 | 26.79 | 25.72 | 26.79 | 26.43 | 23.93 |
| % rubber coverage | 0 | 0 | 0 | 0 | 0 | 0 | 0 |
| Test B Brass plated Kg./cm. | 10.54 | 13.40 | 14.82 | 16.25 | 16.07 | 13.93 | 13.40 |
| % rubber coverage | 70 | 70 | 80 | 80 | 80 | 80 | 80 |
| Test C Brass-plated Kg./cm. | 18.43 | 16.79 | 18.40 | 15.36 | 17.50 | 15.54 | 17.86 |
| % rubber coverage | 60 | 45 | 30 | 30 | 45 | 30 | 40 |

As can be seen from Table I, Test A, adhesion to brass-plated steel cord was generally better in Examples 2—6 than the Control or Example 1 (Comparative Example). For zinc-plated steel cord DSR was better than the Control in Examples 3, 4 and 6, but Example 1 was the best. In test B, oven aging, one test was equal to Example 1 while the other four were better when DSR was added to Stock A; all were better than the Control. The oven aging test is an accelerated heat aging test and is significant in determining the effect of heat on the thermal stability of the chemical bonds formed between the rubber skim stock and the metallic reinforcement during vulcanization. In Test C, the Control was best after which three of the examples having the DSR additive were better than Example 1, while two were inferior thereto. Steam bomb aging for one hour at 149°C. is an accelerated humidity aging test and is significant in determining the chemical stability of the chemical bonds formed between the rubber skim stock and the metallic reinforcement when exposed to moisture or steam under pressure.

In the second series of tests, the effect of DSR and cobalt hydrate singly and together, with Stock A has been determined. Examples 1 and 3 from Table I, utilizing resorcinol and hexamethylenetetramine for adhesion and 1.0 phr DSR, respectively, have been included in Table II, which follows, to facilitate comparison with new Examples 7—9 wherein cobalt hydrate is employed. Tests A—C were again conducted as described hereinabove. As can be seen from Table II, Test A,

# 0 026 294

adhesion of Stock A to the brss-plated steel cord was not overly affected by the addition of cobalt hydrate while the zinc-plated steel cord was significantly improved over Example 1 by the addition of cobalt hydrate to the DSR modified rubber stock. In Test B, again, the zinc-plated steel cord adhesion was better than the brass-plated. In Test C, both brass-plated and zinc plated steel cord faired better.

From Table II, it can be seen that the presence of cobalt hydrate and DSR results in greater adhesion of Stock A to the brass-plated steel cord was not overly affected by the addition of cobalt is obtained when only DSR is employed.

TABLE II

Effect of cobalt hydrate in a DSR modified Stock A

| | Example 1 | Example 3 | Example 7 | Example 8 | Example 9 |
|---|---|---|---|---|---|
| Resorcinol, phr | 2.0 | — | — | — | — |
| Hexamethylenetetramine, phr | 2.2 | — | — | — | — |
| DSR, phr | — | 1.0 | — | 1.00 | 1.00 |
| Cobalt hydrate, phr | — | — | 0.87 | 0.87 | 1.44 |
| **Test A:** | | | | | |
| Plated steel cord[a] | | | | | |
| Brass-plated | | | | | |
| Kg./cm. | 22.15 | 25.72 | 23.75 | 23.93 | 29.29 |
| % rubber coverage | 95 | 90 | 100 | 90 | 85 |
| Zinc-plated | | | | | |
| Kg./cm. | 5.18 | 1.96 | 2.32 | 18.22 | 20.0 |
| % rubber coverage | 0 | 0 | 0 | 55 | 75 |
| **Test B:** | | | | | |
| Oven aged plated steel cord[b] | | | | | |
| Brass-plated | | | | | |
| Kg./cm. | 13.40 | 16.25 | 9.29 | 15.54 | 14.65 |
| % rubber coverage | 70 | 80 | 70 | 80 | 8Q |
| Zinc-plated | | | | | |
| Kg./cm. | 2.50 | 1.43 | 3.21 | 9.82 | 11.07 |
| % rubber coverage | 0 | 0 | 0 | 10 | 10 |
| **Test C:** | | | | | |
| Steam bomb aged plated steel cord[c] | | | | | |
| Brass-plated | | | | | |
| Kg./cm. | 16.79 | 15.36 | 11.97 | 21.07 | 20.54 |
| % rubber coverage | 45 | 30 | 60 | 60 | 60 |
| Zinc-plated | | | | | |
| Kg./cm. | 4.29 | 1.96 | 8.22 | 15.00 | 20.36 |
| % rubber coverage | 0 | 0 | 30 | 25 | 35 |

[a] T-adhesion pads cured 30 minutes at 149°C., and tested at 110°C.

[b] T-adhesion pads cured 30 minutes at 149°C., heat aged in a forced air oven for 2 days at 121°C. and tested at 110°C.

[c] T-adhesion pads cured 30 minutes at 149°C., steam bomb aged 1 hour at 149°C. and tested at 110°C.

In the third series of tests, amounts of cobalt hydrate from 0.58 to 1.44 phr, added to a DSR modified Stock A, are compared, Examples 8 and 9 being from Table II. Example 1 has again been carried forward in Table III, which follows, to facilitate comparison. As can be seen from Tests A—C of Table III, adhesion of Stock A to both the brass-plated and zinc-plated steel cord was significantly improved over Example 1 for all amounts of cobalt hydrate added to the DSR modified rubber skim stock.

6

TABLE III

Effects of different levels of cobalt hydrate in a DSR modified Stock A

|  | Example 1 | Example 10 | Example 8 | Example 11 | Example 9 |
|---|---|---|---|---|---|
| Resorcinol, phr | 2.0 | — | — | — | — |
| Hexamethylenetetramine, phr | 2.2 | — | — | — | — |
| DSR, phr | — | 1.00 | 1.00 | 1.00 | 1.00 |
| Cobalt hydrate, phr | — | 0.58 | 0.87 | 1.16 | 1.44 |
| **Test A:** | | | | | |
| **Plated steel cord[a]** | | | | | |
| Brass-plated | | | | | |
| Kg./cm. | 22.15 | 26.08 | 23.93 | 29.47 | 29.29 |
| % rubber coverage | 95 | 80 | 85 | 85 | 85 |
| Zinc-plated | | | | | |
| Kg./cm. | 5.18 | 12.86 | 18.22 | 17.15 | 20.00 |
| % rubber coverage | 0 | 50 | 55 | 75 | 75 |
| **Test B:** | | | | | |
| **Oven aged plated steel cord[b]** | | | | | |
| Brass-plated | | | | | |
| Kg./cm. | 13.40 | 15.0 | 15.54 | 15.36 | 14.65 |
| % rubber coverage | 70 | 80 | 80 | 80 | 80 |
| Zinc-plated | | | | | |
| Kg./cm. | 2.50 | 9.29 | 9.82 | 11.97 | 11.07 |
| % rubber coverage | 0 | 5 | 10 | 10 | 10 |
| **Test C:** | | | | | |
| **Steam bomb aged plated steel cord[c]** | | | | | |
| Brass-plated | | | | | |
| Kg./cm. | 16.79 | 20.54 | 21.07 | 17.15 | 20.54 |
| % rubber coverage | 45 | 60 | 60 | 60 | 60 |
| Zinc-plated | | | | | |
| Kg./cm. | 4.29 | 15.36 | 15.0 | 17.32 | 20.36 |
| % rubber coverage | 0 | 20 | 25 | 25 | 35 |

[a] T-adhesion pads cured 30 minutes at 149°C. and tested at 110°C.

[b] T-adhesion pads cured 30 minutes at 149°C., heat aged in a forced air oven for 2 days at 121°C. and tested at 110°C.

[c] T-adhesion pads cured 30 minutes at 149°C., steam bomb aged 1 hour at 149°C. and tested at 110°C.

In the fourth series of tests, Stock A was modified by the deletion of the 4.0 parts of process oil. Both the DSR and cobalt hydrate were added thereto for Examples 12 and 13. Example 11, representing Stock A, has been included in Table IV, which follows, to facilitate comparison. As can be seen from Table IV, Test A, either formulation in Example 12 or 13 constitutes a good substitute for the Stock A formulation. In Test B, adhesion is slightly less than for the Stock A formulation, but percent of rubber coverage is improved for the zinc-plated steel cored. In Test C, all results are better than the Stock A formulation.

7

# 0 026 294

## TABLE IV
### Evaluation of DSR and cobalt hydrate as a replacement for process oil in Stock A

| | Example 11 | Example 12 | Example 13 |
|---|---|---|---|
| DSR, phr | 1.0 | 5.0 | 5.0 |
| Cobalt hydrate, phr | 1.16 | 0.7 | 1.16 |
| Process oil, phr | 4.0 | — | — |
| | | | |
| **Test A:** | | | |
| Plated steel cord[a] | | | |
| Brass-plated | | | |
| Kg./cm. | 29.47 | 32.51 | 31.43 |
| % rubber coverage | 85 | 95 | 95 |
| Zinc-plated | | | |
| Kg./cm. | 17.15 | 20.00 | 18.93 |
| % rubber coverage | 75 | 80 | 75 |
| | | | |
| **Test B:** | | | |
| Oven aged plated steel cord[b] | | | |
| Brass-plated | | | |
| Kg./cm. | 15.36 | 13.40 | 12.68 |
| % rubber coverage | 80 | 80 | 80 |
| Zinc-plated | | | |
| Kg./cm. | 11.97 | 9.47 | 9.82 |
| % rubber coverage | 10 | 30 | 30 |
| | | | |
| **Test C:** | | | |
| Steam bomb aged plated steel cord[c] | | | |
| Brass-plated | | | |
| Kg./cm. | 17.15 | 21.61 | 20.36 |
| % rubber coverage | 60 | 75 | 70 |
| Zinc-plated | | | |
| Kg./cm. | 15.0 | 17.15 | 15.18 |
| % rubber coverage | 25 | 50 | 45 |

[a] T-adhesion pads cured 30 minutes at 149°C. and tested at 110°C.

[b] T-adhesion pads cured 30 minutes at 149°C., heat aged in a forced air oven for 2 days at 121°C. and tested at 110°C.

[c] T-adhesion pads cured 30 minutes at 149°C., steam bomb aged 1 hour at 149°C. and tested at 110°C.

In the next sequence of tests a rubber skim stock, Stock B, was prepared to which DSR and cobalt hydrate were again added. Stock B basically differs from Stock A by sulfur content and by the lack of process oil (4.0 phr in Stock A). Inasmuch as the remaining components and the amounts thereof are essentially the same as set forth in the Stock A formulation, the composition of Stock B has not been set forth herein. Except for the difference in sulfur content between Stocks A and B, Example 14 (Stock B) is otherwise identical to Example 12 (Stock A) wherein process oil was omitted as a component of the rubber skim stock.

One compound, Example 14, was tested which comprised Stock B to which was added 0.70 phr cobalt hydrate and 5.0 phr DSR. As in Stock A, the DSR was added as a mixture with process oil comprising 95 percent DSR by weight and 5 percent process oil.

Six sets of tests were conducted with Example 14 which includes T-adhesion determination for vulcanized specimens—unaged or unconditioned, Test A; oven aged Test B; steam bom aged, Test C; and humidity chamber aged after 15, 30 and 60 days, Tests D, E and F respectively. The reuslts are reported in Table V and as in Tables I—IV, the force necessary to pull or remove the metallic reinforcement, brass-plated and zinc-plated steel, from the vulcanized rubber skim stock is given first, in Kg./cm., followed by the percent of rubber skim stock remaining on the surface of the metallic reinforcement. The amount of rubber skim stock remaining on the metallic reinforcement is determined by visual examination and reported as % rubber coverage.

8

TABLE V
Evaluation of cobalt hydrate and DSR as a
replacement for process oil in Stock B

|  | Example 14 |
|---|---|
| DSR, phr | 5.0 |
| Cobalt hydrate, phr | 0.7 |
| Test A: | |
| Plated steel cord[a] | |
| Brass-plated | |
| Kg./cm. | 31.43 |
| % rubber coverage | 95—100 |
| Zinc-plated | |
| Kg./cm. | 20.18 |
| % rubber coverage | 85 |
| Test B: | |
| Oven aged plated steel cord[b] | |
| Brass-plated | |
| Kg./cm. | 16.50 |
| % rubber coverage | 90—95 |
| Zinc-plated | |
| Kg./cm. | 13.75 |
| % rubber coverage | 80—85 |
| Test C: | |
| Steam bomb aged plated steel cord[c] | |
| Brass-plated | |
| Kg./cm. | 24.29 |
| % rubber coverage | 85—90 |
| Zinc-plated | |
| Kg./cm. | 18.90 |
| % rubber coverage | 85—90 |
| Test D: | |
| 15 day humidity chamber test | |
| plated steel cord[d] | |
| Brass-plated | |
| Kg./cm. | 26.80 |
| % rubber coverage | 90—95 |
| Zinc-plated | |
| Kg./cm. | 18.40 |
| % rubber coverage | 80—85 |
| Test E: | |
| 30 day humidity chamber test[d] | |
| Brass-plated | |
| Kg./cm. | 30.90 |
| % rubber coverage | 100 |
| Zinc-plated | |
| Kg./cm. | 18.57 |
| % rubber coverage | 80 |
| Test F: | |
| 60 day humidity chamber test[d] | |
| Brass-plated | |
| Kg./cm. | 26.68 |
| % rubber coverage | 100 |
| Zinc-plated | |
| Kg./cm. | 18.15 |
| % rubber coverage | 80 |

[a] T-adhesion pads cured 30 minutes at 149°C and tested at 110°C.

[b] T-adhesion pads cured 30 minutes at 149°C., heat aged in a forced air oven for 2 days at 121°C. and tested at 110°C.

[c] T-adhesion pads cured 30 min. at 149°C., steam bomb aged 1 hour at 149°C. and tested at 110°C.

[d] T-adhesion pads cured 30 minutes at 149°C., aged in humidity chamber at 90% relative humidity and 35°C. and tested at 110°C.

As can be seen from Table V, adhesion to brass-plated steel cord was superior to zinc-plated steel cord in Tests A—F. Tests D—F, humidity chamber tests are in close agreement with Test C, steam bomb aging being an accelerated humidity aging test. Significance of the humidity chamber tests is again in determining the chemical stability of chemical bonds formed between the rubber skim stock and the metallic reinforcement when exposed to conditions of high relative humidity and high temperature, compared to ambient, and extended periods of time. Although no control was utilized, by comparing the results of Example 14 Tests A—C with those for Example 12 Tests A—C Table IV, it can be seen that adhesion is generally as good as or better when Stock B is employed in lieu of Stock A. It can thus be concluded that the addition of DSR and cobalt hydrate to a rubber skim stock without process oil will improve the adhesion and adhesion retention of the skim stock with brass-plated and zinc-plated steel cord.

In the last series of tests, a rubber skim stock similar to Stock B was prepared to which DSR and nickel hydrate were added. A control, Example 15, was provided containing neither additive; in Examples 16—22 the nickel hydrate was added in a constant amount (0.7 phr) while the amouont of DSR was varied in Examples 17—22. The nickel hydrate was obtained from Shepherd Chemical Company and contained 61% nickel. The DSR was again added as a mixture with process oil comprising 95 percent by weight DSR and 5 percent process oil.

Table VI reports the reuslts of three T-adhesion tests between the vulcanized stocks of Examples 15—22 and brass-plated steel wire. As before, Test A determined unaged or unconditioned vulcanized specimens; Test B, oven aged; and Test C, steam bomb aged.

TABLE VI
Effects of nickel hydrate and different levels
of DSR in Stock B

| | Ex. 15 | Ex. 16 | Ex. 17 | Ex. 18 | Ex. 19 | Ex. 20 | Ex. 21 | Ex. 22 |
|---|---|---|---|---|---|---|---|---|
| DSR, phr | — | — | 0.5 | 1.0 | 2.0 | 5.0 | 7.5 | 10.0 |
| Nickel hydrate, phr | — | 0.7 | 0.7 | 0.7 | 0.7 | 0.7 | 0.7 | 0.7 |
| Test A: | | | | | | | | |
| Unaged or unconditioned plated steel cord[a] | | | | | | | | |
| Brass-plated | | | | | | | | |
| Kg./cm. | 23.93 | 22.86 | 22.86 | 23.40 | 23.93 | 25.00 | 22.50 | 24.29 |
| % rubber coverage | 95 | 95 | 95 | 95 | 95 | 95 | 95 | 95 |
| Test B: | | | | | | | | |
| Oven aged plated steel cord[b] | | | | | | | | |
| Brass-plated | | | | | | | | |
| Kg./cm. | 18.22 | 18.40 | 15.72 | 18.93 | 17.50 | 17.86 | 16.61 | 15.36 |
| % rubber coverage | 85—90 | 80—85 | 85 | 85 | 85 | 90 | 85 | 85 |
| Test C: | | | | | | | | |
| Steam bomb aged plated steel cord[c] | | | | | | | | |
| Brass-plated | | | | | | | | |
| Kg./cm. | 15.00 | 18.57 | 21.43 | 19.65 | 20.54 | 21.79 | 21.07 | 20.36 |
| % rubber coverage | 70—75 | 95 | 95 | 95 | 95 | 95 | 95 | 95 |

[a] T-adhesion pads cured 30 minutes at 149°C., and tested at 110°C.
[b] T-adhesion pads cured 30 minutes at 149°C., heat aged in a forced air oven for 2 days at 121°C. and tested at 110°C.
[c] T-adhesion pads cured 30 minutes at 149°C., steam bomb aged 1 hour at 149°C. and tested at 110°C.

As can be seen from Table VI, the effect of both nickel hydrate and DSR in Examples 17—22 was marginal in Tests A and B; however, in Test C, both adhesion and percent rubber coverage were significantly increased over the control, Example 15, wherein neither ingredient was present. Based on the foregoing results, we do consider the addition of nickel hydrate and DSR to a rubber skim stock to be an effective adhesion promoter.

As stated hereinabove, the wire coated in the practice of our invention can be, for example, brass-plated wire, i.e., 70% Cu, 30% Zn; zinc-plated or bright steel. The wire can be in the form of a strand, mat, web, ply or braid.

The present invention also finds utility in, for example, brassed metal-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

Thus, it can be seen that the disclosed invention carries out the objects set forth hereinabove. As will be apparent to those skilled in the art, the composition of the rubber skim stock can be varied within the scope of our total specification disclosure by the selection of the various ingredients as well as the amounts thereof.

## Claims

1. Cured rubber skim stock compositions having improved metal adhesion and metal adhesion retention properties, characterized by containing 100 parts of a vulcanizable rubber stock; from 0.5 to 30.0 parts by weight of depolymerized scrap rubber, per 100 parts of the rubber component in said rubber stock; and from 0.05 to 10.0 parts by weight of an inorganic salt selected from cobalt chloride, cobalt hydrate, cobalt nitrate, nickel chloride, nickel hydrate and nickel nitrate, per 100 parts of the rubber component in said rubber skim stock.

2. Cured rubber skim stock compositions, as set forth in claim 1, wherein said cobalt salt is cobalt hydrate.

3. Cured rubber skim stock compositions, as set forth in claim 1, wherein said nickel salt is nickel hydrate.

4. Cured rubber skim stock compositions, as set forth in claims 1 or 2, wherein the metal of the inorganic salt is present in a metallic reinforcing cord selected from steel cord, brass-plated steel cord and zinc-plated steel cord.

5. A tyre having metallic reinforcing elements embedded in vulcanized rubber skim stock, said skim stock being characterized by having incorporated therein: from 0.5 to 30.0 parts by weight of depolymerized scrap rubber, per 100 parts of the rubber component in said rubber skim stock; and, from 0.05 to 10.0 parts by weight of an inorganic salt selected from cobalt chloride, cobalt hydrate, cobalt nitrate, nickel chloride, nickel hydrate and nickel nitrate, per 100 parts of the rubber component in said rubber skim stock.

6. A tyre, as set forth in claim 5, wherein the metallic reinforcing elements are selected from steel cord, brass-plated steel cord and zinc-plated steel cord and wherein said inorganic salts are selected from cobalt chloride, cobalt hydrate, cobalt nitrate, nickel chloride, nickel hydrate and nickel nitrate.

7. A tyre, as set forth in claim 6, wherein said cobalt salt is cobalt hydrate.

8. A tyre, as set forth in claim 7, wherein said nickel salt is nickel hydrate.

## Revendications

1. Compositions de charge de caoutchouc vulcanisé "skim" ayant des propriétés améliorées d'adhésion aux métaux et de maintien de l'adhésion aux métaux, caractérisées en ce qu'elles contiennent 100 parties d'une charge de caoutchouc vulcanisable; de 0,5 à 30,0 parties en poids de déchets de caoutchouc dépolymérisé, pour 100 parties du constituant caoutchouc de ladite charge de caoutchouc; de 0,05 à 10,0 parties en poids d'un sel minéral choisi parmi le chlorure de cobalt, l'hydrate de cobalt, le nitrate de cobalt, le chlorure de nickel, l'hydrate de nickel et le nitrate de nickel, pour 100 parties du constituant caoutchouc de ladite charge de caoutchouc skim.

2. Compositions de charge de caoutchouc vulcanisé skim selon la revendication 1, dans lesquelles ledit sel de cobalt est de l'hydrate de cobalt.

3. Compositions de charge de caoutchouc vulcanisé skim selon la revendication 1, dans lesquelles ledit sel de nickel est de l'hydrate de nickel.

4. Compositions de charge de caoutchouc vulcanisé skim selon les revendications 1 ou 2, dans lesquelles le métal du sel minéral est présent dans un câble métallique d'armature choisi parmi un câble d'acier, un câble d'acier revêtu de laiton et un câble d'acier revêtu de zinc.

5. Pneumatique ayant des éléments métalliques d'armature noyés dans une charge de caoutchouc vulcanisé skim, ladite charge de caoutchouc skim étant caractérisée en ce qu'elle renferme: de 0,5 à 30,0 parties en poids de déchets de caoutchouc dépolymérisé, pour 100 parties du constituant caoutchouc de ladite charge de caoutchouc skim; et de 0,05 à 10,0 parties en poids d'un sel minéral choisi parmi le chlorure de cobalt, l'hydrate de cobalt, le nitrate de cobalt, le chlorure de nickel, l'hydrate de nickel et le nitrate de nickel, pour 100 parties du constituant caoutchouc de ladite charge de caoutchouc skim.

6. Pneumatique selon la revendication 5, dans lequel les éléments métalliques d'armature sont choisis parmi un câble d'acier, un câble d'acier revêtu de laiton et un câble d'acier revêtu de zinc, et dans lequel lesdits sels minéraux sont choisis parmi le chlhorure de cobalt, l'hydrate de cobalt, le nitrate de cobalt, le chlorure de nickel, l'hydrate de nickel et le nitrate de nickel.

7. Pneumatique selon la revendication 6, caractérisé en ce que ledit sel de cobalt est de l'hydrate de cobalt.

8. Pneumatique selon la revendication 7, dans lequel ledit sel de nickel est de l'hydrate de nickel.

**Patentansprüche**

1. Vulkanisierte Kautschuk-Skim-Rohmaterialien mit verbesserten Metalladhäsions- und Metalladhäsionsretentionseigenschaften, dadurch gekennzeichnet, daß sie 100 Teile eines vulkanisierbaren Kautschukrohmaterials, 0,5 bis 30,0 Gewichtsteile depolymerisiertem Schrottkautschuk pro 100 Gewichtsteile der Kautschukkomponente in dem Kautschukrohmaterial und 0,05 bis 10,0 Gewichtsteile eines anorganischen Salze, ausgewählt aus Kobaltchlorid, Kobalthydrat, Kobaltnitrat, Nickelchlorid, Nickelhydrat und Nickelnitrat, pro 100 Teil der Kautschukkomponente in dem Kautschuk-Skim-Rohmaterial enthalten.

2. Vulkanisierte Kautshuk-Skim-Rohmaterialien nach Anspruch 1, dadurch gekennzeichnet, daß das Kobaltsalz Kobalthydrat ist.

3. Vulkanisierte Kautschuk-Skim-Rohmaterialien nach Anspruch 1, dadurch gekennzeichnet, daß das Nickelsalz Nickelhydrat ist.

4. Vulkanisierte Kautschuk-Skim-Rohmaterialien nach den Ansprüchen 1 oder 2, dadurch gekennzeichnet, daß das Metall des anorgnischen Salzes in einem metallischen Verstärkungscord, ausgewählt aus Stahlcord, messigplattiertem Stahlcord und zinkplattiertem Stahlcord, vorhanden ist.

5. Reifen mit in ein vulkanisiertes Kautschuk-Skim-Rohmaterial eingebetteten metallischen Verstärkungselementen, dadurch gekennzeichnet, daß in das Skim-Rohmaterial 0,5 bis 30,0 Gewichtsteile depolymerisiertem Schrottkautschuk pro 100 Gewichtsteile der Kautschukkomponente in dem Kautschuk-Skim-Rohmaterial und 0,05 bis 10,0 Gewichtsteile eines anorganischen Salzes, ausgewählt aus Kobaltchlorid, Kobalthydrat, Kobalnitrat, Nickelchlorid, Nickelhydrat und Nickelnitrat, pro 100 Gewichtsteile der Kautschukkomponente in dem Kautschuk-Skim-Rohmaterial eingearbeitet worden sind.

6. Reifen nach Anspruch 5, dadurch gekennzeichnet, daß die metallischen Verstärkungselemente aus Stahlcord, messingplattiertem Stahlcord und zinkplattiertem Stahlcord ausgewählt sind und daß die anorganischen Salze aus Kobaltchlorid, Kobalthydrat, Kobaltnitrat, Nickelchlorid, Nickelhydrat und Nickelnitrat ausgewählt sind.

7. Reifen nach Anspruch 6, dadurch gekennzeichnet, daß das Kobaltsalz Kobalthydrat ist.

8. Reifen nach Anspruch 7, dadurch gekennzeichnet, daß das Nickelsalz Nickelhydrat ist.